(19) Europäisches Patentamt
European Patent Office
Office européen des brevets

(11) Publication number: **0 039 220 B1**

(12) **EUROPEAN PATENT SPECIFICATION**

(45) Date of publication of patent specification: **14.09.83**

(51) Int. Cl.$^3$: **C 01 F 7/54**, G 02 F 1/23, H 01 M 6/18

(21) Application number: **81301820.7**

(22) Date of filing: **24.04.81**

(54) **Amorphous lithium fluoaluminate, a solid electrolyte comprising the same and devices including the same.**

(30) Priority: **25.04.80 JP 54159/80**
**12.11.80 JP 158298/80**

(43) Date of publication of application:
**04.11.81 Bulletin 81/44**

(45) Publication of the grant of the patent:
**14.09.83 Bulletin 83/37**

(84) Designated contracting states:
**CH DE FR GB LI NL**

(56) References cited:
**US A 4 004 946**
**US A 4 009 936**

**JAPANESE JOURNAL OF APPLIED PHYSICS, Vol. 20, n° 3, March 1981 M. SHIZUKUISHI, E. KAGA, I. SHIMIZU, H. KOKADO, E. INOUE « Electrochromic display device based on amorphous WO3 and solid proton conductor » pages 581-586**

(73) Proprietor: **Hitachi, Ltd.**
**5-1, Marunouchi 1-chome**
**Chiyoda-ku Tokyo 100 (JP)**

(72) Inventor: **OI, Tetsu**
**6-22-17 Honkomagome**
**Bunkyo-ku, Tokyo (JP)**

(74) Representative: **Paget, Hugh Charles Edward et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

EP 0 039 220 B1

# Amorphous lithium fluoaluminate, a solid electrolyte comprising the same and devices including the same

The present invention relates to an amorphous lithium fluoaluminate, to a solid electrolyte comprising this for use for example in electrochromic display devices and lithium batteries.

In order to make an all solid state electrochromic display device or the like, it is necessary to use a solid substance which has a lithium ion conductivity $\sigma_{25}$ of a least $1 \times 10^{-6}$ $(\Omega\text{-cm})^{-1}$ at room temperature (25 °C) and is stable in air and which can easily be formed into a solid film having a thickness of 1 to 10 µm. As substances satisfying these requirements, there have been proposed and examined $Li_xNa_{1-x}$/β-alumina and $Li_3N$ as disclosed in Japanese Laid-Open Patent Application No. 43505/80. However, the first of these is defective in that formation of a film is difficult, and the second is not stable in air. In addition, films of $RbAg_4I_5$, LiF, $MgF_2$ and $Cr_2O_3$ have been proposed, but these are defective in that the time required for coloration and bleaching is very long (longer than 1 minute), they are significantly affected by the atmosphere, reproducibility is poor, they have no memory action and their life is short.

It is an object of the present invention to provide an amorphous substance having a high ionic conductivity, suitable e. g. as a solid electrolyte for an electrochromic display device or the like.

The invention is further explained and embodiments of the invention are described below with reference to the accompanying drawings, in which :

Figure 1a is an equilibrium phase diagram of the LiF-$AlF_3$ system.

Figure 1b is an equilibrium phase diagram of the NaF-$AlF_3$ system.

Figure 1c is an equilibrium phase diagram of the KF-$AlF_3$ system.

Figure 2 is a diagram showing the fictitious structures of $Na_5Al_3F_{14}$ crystal and $Li_5Al_3F_{14}$ crystal.

Figure 3 is a graph illustrating the relation between mol.-% of $AlF_3$ and lithium ion conductivity in a synthesized LiF-$AlF_3$ system non-equilibrium compound.

Figure 4 is a sectional view of an electrochromic display device including an amorphous substance embodying the present invention.

Before the present invention is described in detail, equilibrium phases appearing in the MF-$AlF_3$ system (where M is Li, Na or K) will first be described with reference to equilibrium phase diagrams of Figs. 1a, 1b and 1c.

1) In the LiF-$AlF_3$ system, only $Li_3AlF_6$ (corresponding to 3LiF-$AlF_3$) is present as a stable compound [see Fig. 1a].

2) In the NaF-$AlF_3$ system, $Na_3AlF_6$ (corresponding to 3NaF-$AlF_3$) and $Na_5Al_3F_{14}$ (corresponding to 5NaF-3$AlF_3$) are present as stable compounds [see Fig. 1b].

3) In the KF-$AlF_3$ system, $K_3AlF_6$ (corresponding to 3KF-$AlF_3$) and $KAlF_4$ (corresponding to KF-$AlF_3$) are present as stable compounds [see Fig. 1c].

When considering $M_5Al_3F_{14}$ crystals which are absent in the LiF-$AlF_3$ system but are present in the NaF-$AlF_3$, we examined whether or not non-equilibrium or amorphous $Li_5Al_3F_{14}$ would be present and whether or not its lithium ion conductivity would be high. It was found that the compounds and amorphous substances having compositions as shown in Examples below could be obtained and that these amorphous substances had a lithium ion conductivity as high as $10^{-5}$ $(\Omega\text{-cm})^{-1}$. The reason for this will now be described from the aspect of crystal chemistry.

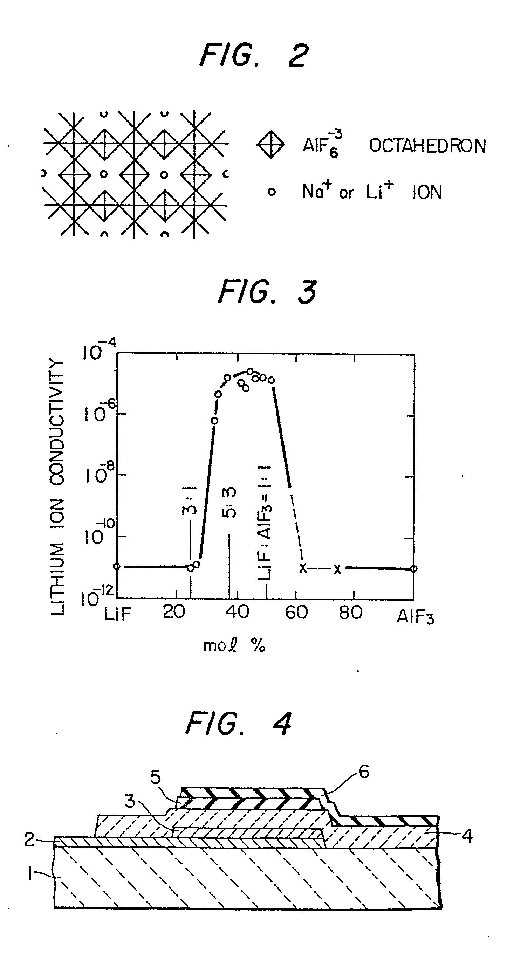

Six $F^-$ ions coordinate around one $Al^{3-}$ ion to form an octahedral structure, and this $AlF_6^{3-}$ octahedron is the basic crystalline structural unit. The $Na_5Al_3F_{14}$ crystal, which has a stable phase, has a cubic structure in which four apices of this octahedron are co-owned and the remaining spaces are filled with $Na^+$ ions (see Fig. 2).

When the composition $Li_5Al_3F_{14}$ is melted or evaporated, since the stable $LiAlF_4$ molecule is present, a mixture of LiF molecules and $LiAlF_4$ molecules will be formed according to the following reaction :

$$5LiF \cdot 3AlF_3 \longrightarrow 2LiF + 3LiAlF_4.$$

When this mixture is condensed to a solid, because of the demands of the chemical bond theory, (a) the Al-F-Li bond will be conserved and (b) the $AlF_6^{3-}$ octahedron will be formed. At thermal equilibrium, the mixture will be separated into two phases of $Li_3AlF_6$ and $AlF_3$ according to the following reaction :

$$2LiF + 3LiAlF_4 \longrightarrow 5/3Li_3AlF_6 + 4/3AlF_3.$$

However, in order for this two-phase separation to take place, it is necessary that (c) the Al-F-Li bond is broken and (d) growth of $Li_3AlF_6$ crystal and $AlF_3$ crystal by long range diffusion of molecules should occur.

Supposing that the following reaction takes place :

$$2LiF + 3LiAlF_4 \longrightarrow Li_5Al_3F_{14}.$$

the elementary process is only (e) annexation of the LiF molecule to the $LiAlF_4$ molecule, and rupture of the Al-F-Li bond which is inherently stable and long range diffusion of molecules need not occur. Thus, if

a melt or vapor of $5LiF \cdot 3AlF_3$ is rapidly cooled and solidified, non-equilibrium or amorphous $Li_5Al_3F_{14}$ is formed.

Not only does such non-equilibrium or amorphous $Li_5Al_3F_{14}$ (corresponding to $5LiF \cdot 3AlF_3$) exist but also amorphous $5Li_xNa_{1-x}F \cdot 3AlF_3$ ($0.1 \leqq x \leqq 1.0$) in which a part of the LiF is replaced by NaF.

$MAlF_4$ and analogous substances will now be described from the aspect of crystal chemistry.

1) $MAlF_4$ in which M is Li or Na does not have a thermal equilibrium phase.

2) $MAlF_4$ in which M is K has a thermal equilibrium phase, see Fig. 1c, as also does $MAlF_4$ where M is Rb, Cs, Tl or $NH_4$. In such materials, six F atoms coordinate around one Al atome to form an octahedral structure. The material has a structure in which layers consisting solely of this octahedral structure and layers consisting solely of a monovalent ion are alternatingly laminated. The unit cell belongs to the cubic system.

3) This layered structure is like that of β-alumina or $Li_3N$, and it was at one time expected that the monovalent ion would have an ionic conductivity. However, the $\sigma_{25}$ value actually measured for $KAlF_4$ is lower than $10^{-10}$ $(\Omega\text{-cm})^{-1}$, this material cannot be called an « ionic conductor ». Where M is a larger monovalent ion, such as Rb, Cs, Tl or $NH_4$, a lower ionic conductivity is expected.

4) The molecule $MAlF_4$ in which M is Li is stable in the gas phase.

5) When $MAlF_4$ in which M is Li is condensed from the gas phase, a quasi-equilibrium solid phase is obtained in the form of a crystal or powder.

6) When a liquid phase of $MAlF_4$ in which M is Na is rapidly cooled, a quasi-equilibrium solid phase is obtained in the form of a crystal or powder.

7) A quasi-equilibrium phase crystal of $MAlF_4$ in which M is Li or Na has a structure similar to that in which M is K, Rb etc.

8) The lattice constant of a quasi-equilibrium phase crystal of $MAlF_4$ in which M is Li or Na is equal to that of the crystal in which M is K, Rb etc. However, the ionic radius of Li or Na is smaller than that of K, Rb etc. Accordingly, it is theoretically expected that the mobility of the Li or Na ion in such a crystal is larger. However, the level of this mobility has not in practice been measured.

9) If Al in $MAlF_4$ is replaced by another trivalent ion, for example Y, Yb or Eu, and M is Li or Na, a thermal equilibrium phase exists. However, ionic conductivity in such a substance has not been found.

10) If F in $MAlF_4$ is replaced by another halogen, such as Cl, and M is Li or Na a thermal equilibrium phase exists, and the ionic conductivity $\sigma_{25}$ is as high as $1 \times 10^{-6}$ $(\Omega\text{-cm})^{-1}$. However, this tetrachloride is highly hygroscopic and cannot exist stably in air.

It is apparent from these considerations that a quasi-equilibrium phase crystal of $MAlF_4$ in which M is Li or Na can be obtained, and it is expected that if this crystal has a definite dimension its ionic conductivity can be measured and that industrial applications could be developed. It might be thought that this could be attained by sintering powders obtained as described in paragraphs (5) and (6) above to form ceramics. However, during sintering, the powders of the quasi-equilibrium phase are decomposed to a stable phase according to the following reaction :

$$3MAlF_4 \longrightarrow M_3AlF_6 + 2AlF_3$$

In practice, therefore, it is impossible to obtain such a quasi-equilibrium phase sintered body.

In the light of the foregoing discussion, it might well be concluded that realization of a lithium ion or sodium ion conductor of the form $MAlF_4$ would be impossible. The present invention is based on the finding that such a conductor can in practice be produced. The theoretical basis for the formation of this novel substance will now be described from the aspect of chemical bond theory.

As is well known, Li and F crystallize in an NaCl-type structure where six foreign atoms coordinate with each other according to the mutual ion bonding, the ion radius ratio and the ion valency. Similarly, Al and 3F are crystallized to a perovskite structure (strictly speaking, a deformed perovskite structure) in which six F atoms coordinate with Al in the octahedral form and two Al atoms coordinate with F, i. e. the respective apices of the octahedron are co-owned by Al and F. This octahedral structure expediently expressed as $AlF_6^{-3}$ is very stable and is the basic unit in a crystal of a compound containing Al and F. In contrast, the fundamental form of bonding of Li and F is not always the NaCl type six-coordinate form. This difference of coordination with F of Al and Li is because the Al-F bond has a more covalent nature than the Li-F bond. It may be said that this $AlF_6^{3-}$ octahedron has crystal and chemical characters similar to those of the $SiO_4^{4-}$ tetrahedron, the $AlO_6^{6-}$ octahedron and the $WO_6^{6-}$ octahedron.

As described in paragraph (4) above, when $LiF \cdot AlF_3$ is evaporated, a molecule $LiAlF_4$ exists stably in the gas. This, however, is not expected if one takes into account that the $LiAlF_4$ molecule contains two ions having a low electronegativity ($Li^+$ and $Al^{+++}$) between which the electrostatic repulsive force is extremely large. This fact will not be satisfactorily explained unless it is presumed that any Al-F-Li bond having a covalent nature exists stably. Furthermore, as already pointed out, the Al-F bond tends to have a structure in which F atoms coordinate around the Al atom, though in the $LiAlF_4$ molecule, the coordination number is not 6 providing a stable structure but is 4. Therefore, it is considered that the $LiAlF_4$ molecule has the following structure :

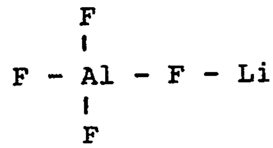

Condensation of a gas or liquid (a molecule which exists stably in the gas form should naturally exist stably as a liquid) consisting of the $LiAlF_4$ molecule, which is considered to have directional order due to the covalent bonding, to a solid will now be discussed. Because of the demands of chemical bonding theory, in the solid phase (a) the Al-F-Li bond will be conserved and (b) the $AlF_6^{---}$ octahedron will be formed. The equilibrium phase diagram experimentally demonstrates that crystalline $LiAlF_4$ is not present but the solid is always separated into the two phases $Li_3AlF_6$ and $AlF_3$. (This is because, since the ion radius of Li is too small, a fictitious $LiAlF_4$ crystal cannot exist stably. In fact, $MAlF_4$ crystals in which M is K, Rb or Cs, which have a low electronegativity comparable to that of Li but larger ion radii than Li exist stably). In the two separated phases, $Li_3AlF_6$ satisfies the above conditions (a) and (b) and $AlF_3$ free of Li satisfies the above conditions (b).

In order for separation into the two phases to take place, it is necessary that (c) breakage of the Al-F-Li bond and (d) growth of the $Li_3AlF_6$ and $AlF_3$ crystals by long range diffusion of molecules should take place. Both (c) and (d) are thermally activated processes. The condition reached by sufficient progress of these processes is the two-phase separation state and the equilibrium phase diagram illustrates this condition.

We will now discuss what state will be obtained if the thermally activated processes (c) and (d) are sufficiently advanced. Since the Al-F-Li bond is inherently stable, this bond will tend to conserve its original state, whereas a molecular rotation and a half molecule length progress will be given to the Al-F bond in minimum quantities necessary to adopt the mos+ stable 6-coordination structure in the solid at ratios corresponding to the given time. It will be understood that one state of the solid so-formed is the non-equilibrium $LiAlF_4$ (or $NaAlF_4$) crystal described in paragraphs (5) and (6) above. Furthermore, there is a fair possibility that the minimum thermally activated process described above will guarantee only short range ordering in the formation of the network of the $AlF_6^{3-}$ octahedral structure. In other words, although of the six apices of the regular octahedron, four should be co-owned by F atoms of other regular octahedra to achieve a regular crystallinity, there are actually apices not co-owned or there are ridges which are co-owned, or a state may exist where such co-ownership relations are mixed. In such states, long range ordering is not present in the atom arrangement, and therefore an amorphous structure is observed in X-ray diffractiometry.

In short, when a gas or liquid consisting of molecules of $LiAlF_4$ is rapidly cooled to a solid, there is obtained an amorphous substance which has a non-equilibrium $LiAlF_4$ crystal structure or a $LiAlF_4$ crystal structure having only short range ordering.

The amorphous substance of the present invention is a substance represented by the formula:

$$aLi_xNa_{1-x}F \cdot bAlF_3$$

wherein a is a molar fraction in the range 0.45 to 0.7, b is a molar fraction in the range 0.3 to 0.55, and x is in the range 0.1 to 1.0 except when a is 0.5 and b is 0.5 in which case x is in the range 0 to 1.0.

Preferred features of the invention are claimed in the claims 2-8.

The substance of the present invention can have excellent electrical conductivity and can be used as a solid electrolyte. The electrical conductivity is especially high when $0.5 \leqq x \leqq 1.0$.

The substance of the present invention can be prepared, for example, by rapidly cooling a melt or gas having the desired composition, or a vacuum evaporation deposition method may for example be adopted.

Examples of the present invention will now be given, but they are not intended to limit the scope of the invention.

Example 1

A powder of a stoichiometric composition of LiF and $AlF_3$ was charged into an evaporation boat made of tungsten, and evaporated by resistance heating in a vacuum evaporation apparatus to deposit a solid on a substrate. In various runs the degree of vacuum was 1 to 5 mPa and the boat temperature was 700 to 1 000 °C. The substrate was a slide glass or a ITO-coated (indium-tin oxide-coated) slide glass and was maintained at room temperature. The deposition speed was 10 to 100 nm/min. The deposit formed was a colorless and transparent film firmly adhering to the substrate. In the X-ray diffraction diagram of the film, no peak was observed, and it was confirmed that the film was amorphous. On chemical analysis, it was found that the film had an average composition of $Li_{1.2}AlF_{4.2}$.

A Li-Al alloy film electrode was deposited on this amorphous film on the ITO coating by vacuum evaporation deposition, and when a DC field of less than 3V was applied between the ITO and the electrode, an electric conductivity of $0.5 \times 10^{-5}$ to $2 \times 10^{-5}$ $(\Omega\text{-cm})^{-1}$ was observed at room temperature

only if $Li^+$ ions were deemed to be stationary in the film. Accordingly, it was judged that this film is a lithium ion conductor having the above electric conductivity.

By changing the mixing ratio of the starting materials to be evaporated, there were obtained evaporation deposition products in which the $LiF/AlF_3$ molar ratio was such that x = 1 or was in the range 0.8 to 1.2. Each of these products had lithium ion conductivity.

Example 2

A process was carried out as in Example 1 except that the substrate temperature was 300 °C. The vacuum evaporation film obtained consisted of a non-equilibrium $LiAlF_4$ crystal and had a thickness of 1.0 μm. This film had a lithium ion conductivity of $2 \times 10^{-5}$ $(\Omega\text{-cm})^{-1}$.

Example 3

A powder of a stoichiometric composition of LiF and $AlF_3$ was charged into a Pt crucible having a small hole of size $0.2 \times 5$ $mm^2$ in the bottom, and was heated and melted at 930 °C in an argon atmosphere by high frequency heating. The melt was ejected from the small hole by the argon gas pressure and allowed to fall onto a rotating roll made of Cu to cool it rapidly. A ribbon having a width of 5 mm and a thickness of 15 to 30 μm was obtained. No peak was observed in the X-ray diffraction diagram of the ribbon, and it was confirmed that the ribbon was amorphous.

Li-Al alloy vacuum evaporation film electrodes were formed on both the surfaces of the ribbon, and the DC conductivity was examined and found to be $1 \times 10^{-5}$ $(\Omega\text{-cm})^{-1}$ at room temperature. Cr-Au laminate vacuum evaporation film electrodes were formed on both the surfaces of the ribbon and the AC conductivity was measured at 1 KHz, and found to be $1 \times 10^{-5}$ $(\Omega\text{-cm})^{-1}$. It was thus confirmed that this amorphous ribbon was a lithium ion conductor having a composition corresponding to $LiAlF_4$.

Example 4

A vacuum evaporation film having a thickness of 1.0 μm was obtained from a starting material which was a stoichiometric composition of NaF and $AlF_3$, as described in Example 1. No peak was observed in the X-ray diffraction diagram of the film, and it was confirmed that the film was amorphous. By chemical analysis, it was found that the film had an average composition of $Na_{1.1}AlF_{4.1}$. The Na ion conductivity of the film at room temperature was $0.8 \times 10^{-5}$ $(\Omega\text{-cm})^{-1}$.

Example 5

A vacuum evaporation film having a thickness of 1.0 μm was prepared from a mixture containing LiF, NaF and $AlF_3$ at a molar ratio of 0.5/0.5/1 as described in Examples 1 and 4. No peak was observed in the X-ray diffraction diagram of the film, and it was confirmed that the film was amorphous. By chemical analysis, it was found that the film had an average composition of $Li_{0.6}Na_{0.5}AlF_{4.1}$. The ionic conductivity of the film was $0.5 \times 10^{-5}$ $(\Omega\text{-cm})^{-1}$ at room temperature.

Example 6

A powder of a mixture containing LiF and $AlF_3$ at a molar ratio of 5/3 was vacuum-evaporated to form a film. In various runs, the degree of vacuum was 1 to 5 mPa and the boat temperature was 700 to 1 000 °C. The vacuum evaporation speed was 10 to 100 mn/min and the substrate temperature was room temperature or 200 °C. As the substrate, there was used a slide glass or an ITO-coated (indium-tin oxide-coated) slide glass. The film formed had a thickness of 1.0 μm and was colorless and transparent and adhered firmly to the substrate. No peak was observed in the X-ray diffraction diagram of the film, and it was confirmed that the film was amorphous. By chemical analysis, it was found that the film had an average composition of $Li_{5.5}Al_{3.0}F_{14.5}$.

This amorphous substance thus corresponded to $5.5LiF \cdot 3AlF_3$, and the molar ratio of $AlF_3$ of this amorphous substance in the $LiF \cdot AlF_3$ system was expressed as 35.3 mol.-% $AlF_3$.

A Li-Al alloy film electrode was vacuum-evaporated on this film deposited on the ITO coating, and a DC field of less than 3V was applied between ITO and Li-Al alloy. The electric conductivity of $2 \times 10^{-5}$ $(\Omega\text{-cm})^{-1}$ was measured at room temperature (25 °C) only when $Li^+$ ions were deemed to be stationary in the film. Accordingly, it was judged that the film was a lithium ion conductor having the above electric conductivity.

Example 7

The process of Example 6 was carried out in a number of runs with the $LiF/AlF_3$ molar ratio varied to obtain the results shown in Fig. 3, from which it is seen that when, the molar ratio is 5/3 or 1/1, a high lithium ion conductivity is obtained. Between these two molar ratios, a similarly high lithium ion

conductivity can be obtained. It is thought that the reason for this is that each of substances having such an intermediate composition is a mixture of compounds having high ionic conductivity. On the other hand, an amorphous film in which the proportion of LiF is increased so that the molar ratio is 3/1 (corresponding to the stable phase $Li_3AlF_6$), like LiF alone, has no ionic conductivity.

In a film in which the proportion of $AlF_3$ is higher than the molar ratio of 1/1, cracking or peeling is conspicuous, and measurement of the lithium ion conductivity is therefore impossible. Of course, such a film cannot be put into practical use. Although this macroscopic defect is observed in a film of $AlF_3$ alone, the film has no lithium ion conductivity at all.

Example 8

The process of Example 6 was changed in that half of the LiF was replaced by NaF. An amorphous substance having the composition $Li_{2.75}Na_{2.75}Al_{3.0}F_{14.5}$ was obtained. The lithium ion conductivity of this was $1 \times 10^{-5}$ $(\Omega\text{-cm})^{-1}$.

Example 9

A powder containing LiF and $AlF_3$ at a molar ratio of 5/3 was charged into a Pt crucible having a small hole of size $0.2 \times 5$ mm² in the bottom, and was heated and melted at 800 °C in an argon atmosphere by high frequency heating. The melt was ejected from the small hole by the argon gas pressure and allowed to fall onto a rotating roll made of Cu to cool it rapidly. A ribbon of width 5 mm and thickness about 30 μm was obtained. From X-ray diffractiometry, it was found that the ribbon had an amorphous structure.

Li-Al or Cr-Au electrodes were vacuum-evaporated onto both the surfaces of the ribbon, and the DC conductivity and AC conductivity were measured. It was found that the lithium ion conductivity was $1 \times 10^{-5}$ $(\Omega\text{-cm})^{-1}$.

Example 10

A film was prepared by vacuum evaporation of a mixture containing LiF and $AlF_3$ at a molar ratio of 6/3 (= 2/1). By chemical analysis, it was found that the average composition of the film was $Li_{6.5}Al_{3.0}F_{15.5}$. The ionic conductivity (regarded as the lithium ion conductivity) of the film was $1 \times 10^{-5}$ $(\Omega\text{-cm})^{-1}$ at room temperature.

This substance can be regarded not only as intermediate between $Li_5Al_3F_{14}$ and $Li_3AlF_6$ but also as intermediate between $Li_2AlF_5$ and $Li_3AlF_6$. Of course, $Li_2AlF_5$ is not present as an equilibrium phase in the LiF-$AlF_3$ phase diagram, and even if Li is replaced by Na or K, no stable phase appears. Only if Li is replaced by Tl does a stable phase appear. The substance has a one-dimensional chain structure in which two apices of the $AlF_6^{3-}$ octahedron are co-owned.

Example 11

The amorphous substance of this example is used in an electrochormic display device.

The structure and preparation of an electrochromic display device will now be described with reference to Fig. 4.

A transparent electrode 2 (consisting of indium-tin oxide and having a thickness of 0.2 μm) is coated onto a glass substrate 1 and worked by photo-etching to give a desired plane configuration. A display electrode 3 (a tungsten oxide vacuum evaporation film having a thickness of 0.3 μm) having a desired plane configuration is formed on the electrode 2. A $LiAlF_4$ vacuum evaporation film 4 is deposited to cover the entire surface by mixing LiF powder with $AlF_3$ powder at a molar ratio of 1/1, charging the mixture into a tungsten boat and heating the boat at 700 to 1 000 °C to effect evaporation. The substrate temperature is room temperature, the deposition speed is 30 nm/min and the film thickness is 1.0 μm.

A counter-electrode 5 is then formed, consisting of a vacuum evaporation film of LiAl, by mask deposition so that only the display electrode 3 is covered. The film thickness of the counter-electrode was 0.5 μm. Then, an electrode 6 is formed to connect the counter-electrode 5 with an outer electrode. The electrode 6 consists of a vacuum evaporation film of Al having a thickness of 0.5 μm and is prepared by mask deposition so that a desired configuration is given to the electrode 6. The transparent electrode 2 and electrode 6 are not opposed to each other except where the display electrode is disposed. By this arrangement, unexpected and unnecessary electronic conduction can be reduced to a minimum level.

The resulting element is sealed in an appropriate package (not shown) to prevent mechanical and chemical damage. The main operational characteristics of the all solid state electrochromic display device so obtained at room temperature are as follows.

| | |
|---|---|
| Color : | dark blue/silver white |
| Reflection ratio : | 50 %/100 % |
| Response time for coloration of bleaching : | 5 seconds |
| Voltage : | 5 V |

| | |
|---|---|
| Charge consumption : | 12 mC/$cm^2$ |
| Memory period : | 100 hours |

Similar electrochromic display devices can be prepared from the amorphous substances of Examples 1 to 10, by the method of Example 11.

**Claims**

1. An amorphous substance having the general formula :

$$aLi_xNa_{1-x}F \cdot bAlF_3$$

wherein a is a molar fraction in the range 0.45 to 0.7, b is a molar fraction in the range 0.3 to 0.55, and x is in the range 0.1 to 1.0 except when a is 0.5 and b is 0.5 in which case x is in the range 0 to 1.0.

2. A substance according to claim 1, wherein a is in the range 0.50 to 0.70 and b is in the range 0.3 to 0.50.

3. A substance according to claim 1 or claim 2 wherein x is in the range 0.5 to 1.0.

4. A substance according to claim 3 wherein x is 1.

5. A substance according to any one of claims 1 to 4 which is a non-equilibrium $Li_5Al_3F_{14}$ compound.

6. A substance according to claim 1, having the formula :

$$Li_xNa_{1-x}AlF_4$$

wherein x is in the range 0 to 1.

7. A substance according to claim 6, wherein x is 1.

8. A substance according to claim 6, wherein x is 0.

9. A solid electrolyte comprising an amorphous substance according to any one of the preceding claims.

10. An electrochromic display device having a solid electrolyte according to claim 9.

11. A lithium battery having a solid electrolyte according to claim 9.

**Ansprüche**

1. Eine amorphe Substanz mit der allgemeinen Formel :

$$aLi_xNa_{1-x}F \cdot bAlF_3$$

wobei a ein Molenbruch im Bereich von 0,45 bis 0,7, b ein Molenbruch im Bereich von 0,3 bis 0,55 ist und x in dem Bereich von 0,1 bis 1,0 liegt ausgenommen, wenn a 0,5 und b 0,5 betragen, in welchem Fall x im Bereich von 0 bis 1,0 liegt.

2. Eine Substanz nach Anspruch 1, wobei a im Bereich von 0,50 bis 0,70 und b im Bereich von 0,3 bis 0,50 ist.

3. Eine Substanz nach Anspruch 1 oder Anspruch 2, wobei x im Bereich von 0,5 bis 1,0 ist.

4. Eine Substanz nach Anspruch 3, wobei x gleich 1 ist.

5. Eine Substanz nach einem der Ansprüche 1 bis 4, die eine Nicht-Gleichgewichts-$Li_5Al_3F_{14}$-Verbindung ist.

6. Eine Substanz nach Anspruch 1 mit der Formel :

$$Li_xNa_{1-x}AlF_4$$

wobei x im Bereich von 0 bis 1 ist.

7. Eine Substanz nach Anspruch 6, wobei x gleich 1 ist.

8. Eine Substanz nach Anspruch 6, wobei x gleich 0 ist.

9. Ein fester Elektrolyt, der eine amorphe Substanz nach einem der vorangehenden Ansprüche enthält.

10. Eine elektrochrome Anzeigevorrichtung, die einen festen Elektrolyten nach Anspruch 9 aufweist.

11. Eine Lithiumbatterie, die einen festen Elektrolyten nach Anspruch 9 aufweist.

**Revendications**

1. Substance amorphe, possédant la forme générale :

$$aLi_xNa_{1-x}F \cdot bAlF_3$$

dans laquelle a est une fraction molaire comprise dans la gamme de 0,45 à 0,7, b est une fraction molaire située dans la gamme de 0,3 à 0,55, et x se situe dans la gamme de 0,1 à 1, hormis lorsque a est égal à 0,5 et b est égal à 0,5, auquel cas x se situe dans la gamme de 0 à 1.

2. Substance selon la revendication 1, où a est situé dans la gamme comprise entre 0,5 et 0,7 et que b est situé dans la gamme située entre 0,3 et 0,5.

3. Substance selon l'une quelconque des revendications 1 ou 2, où x est situé dans la gamme comprise entre 0,5 et 1.

4. Substance selon la revendication 3, où x est égal à 1.

5. Substance selon l'une quelconque des revendications 1 à 4, où il s'agit d'un composé $Li_5Al_3F_{14}$ non équilibré.

6. Substance selon la revendication 1, où elle possède la formule :

$$Li_xNa_{1-x}AlF_4$$

dans laquelle x se situe dans la gamme comprise entre 0 et 1.

7. Substance selon la revendication 6, où x est égal à 1.

8. Substance selon la revendication 6, où x est égal à 0.

9. Electrolyte solide, comprenant une substance amorphe selon l'une quelconque des revendications 1 à 8.

10. Dispositif d'affichage électrochromique, comprenant un électrolyte solide conformément à la revendication 9.

11. Pile au lithium, comprenant un électrolyte solide conformément à la revendication 9.

FIG. 1(a)

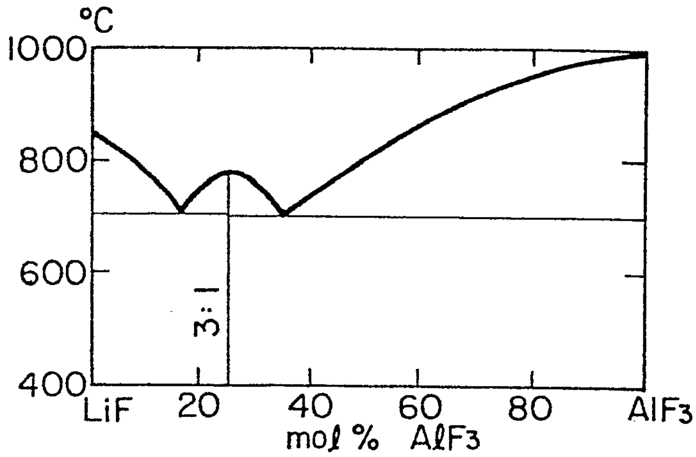


FIG. 1(b)

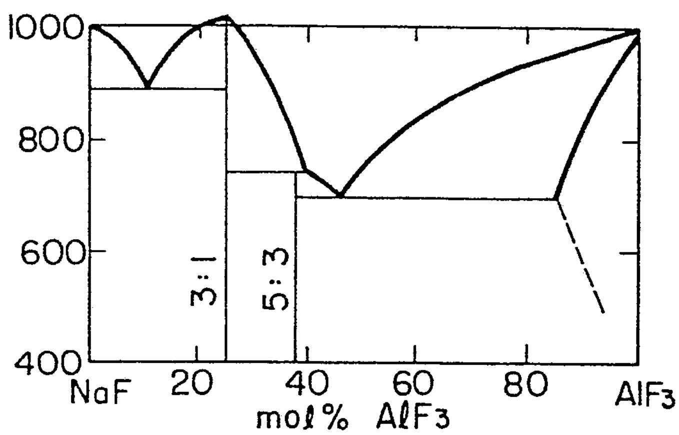


FIG. 1(c)

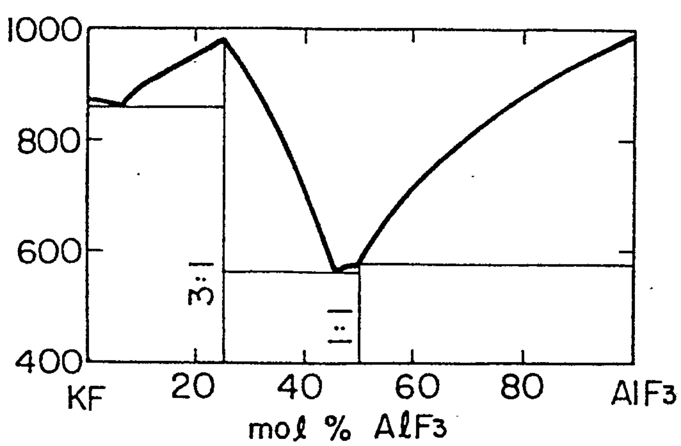

FIG. 2

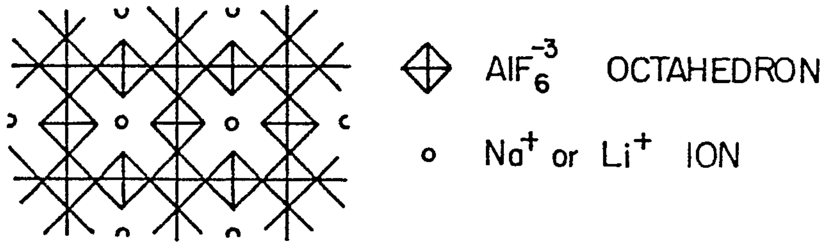


FIG. 3

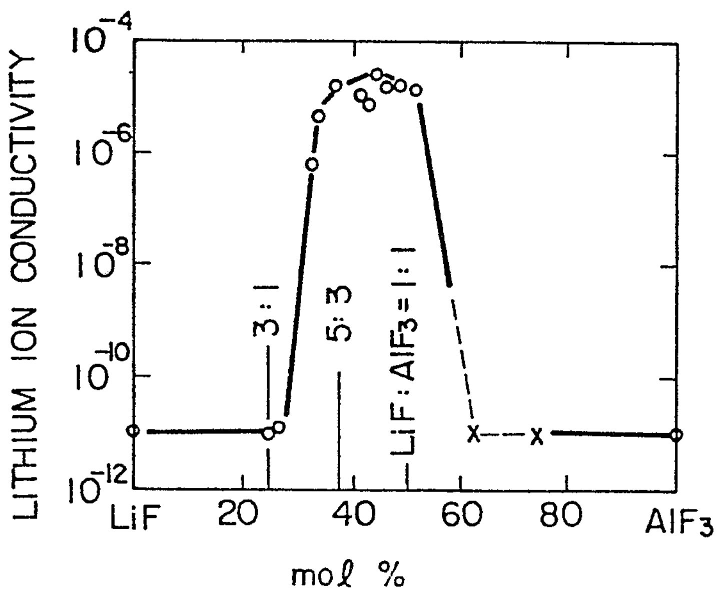


FIG. 4